# EUROPÄISCHE PATENTANMELDUNG

(11) **EP 1 681 486 A2**
(43) Veröffentlichungstag der Anmeldung: **19.07.2006**
(21) Anmeldenummer: 05027259.0
(22) Anmeldetag: 14.12.2005
(51) Int. Cl.: F16D 48/02

(54) **System und Verfahren zum Kühlen einer Kupplung eines Fahrzeuges mit einer Ventileinrichtung**

(30) Priorität: 13.01.2005 DE 102005001573
(71) Anmelder: LuK Lamellen und Kupplungsbau Beteiligungs KG, 77815 Bühl (DE)
(72) Erfinder: Müller, Eric, 67657 Kaiserslautern (DE); Homm, Manfred, 77815 Bühl-Neusatz (DE)

(57) **Zusammenfassung**

Es wird ein System zum Kühlen einer Kupplung eines Fahrzeuges mit einer Ventileinrichtung (14) vorgeschlagen, über die ein Kühlstromkreis (1) mit einem Pumpenstromkreis (2) koppelbar ist, wobei die Ventileinrichtung einen Steuerkolben (15) aufweist, welcher zumindest zum Ansteuern der Verbindung zwischen dem Kühlstromkreis und dem Pumpenstromkreis bewegbar ist. Ferner wird ein Verfahren zum Kühlen einer Kupplung eines Fahrzeuges vorgeschlagen, bei dem eine Ventileinrichtung verwendet wird, über die ein Kühlstromkreis mit einem Pumpenstromkreis gekoppelt wird.

## Beschreibung

Die vorliegende Erfindung betrifft ein System zum Kühlen einer Kupplung eines Fahrzeuges mit einer Ventileinrichtung, über die ein Kühlstromkreis mit einem Pumpenstromkreis koppelbar ist. Des Weiteren betrifft die vorliegende Erfindung ein Verfahren zum Kühlen einer Kupplung eines Fahrzeuges, bei dem eine Ventileinrichtung verwendet wird, mit der ein Kühlstromkreis und ein Pumpenstromkreis gekoppelt wird.

Aus der Fahrzeugtechnik sind ein System und ein Verfahren zum Kühlen einer Kupplung eines Fahrzeuges bekannt. Das bekannte System weist zwei Ventileinrichtungen auf, wobei eine erste Ventileinrichtung zur Kupplungskühlung verwendet wird, welche mit einem Rücklauf und einem Zulauf des Kühlstromkreises verbunden ist. Ferner ist eine zweite als Mindestdruckventil ausgebildete Ventileinrichtung bei dem bekannten System erforderlich. Das Mindestdruckventil ist mit dem Ventil zur Kupplungskühlung und mit einem Pumpenstromkreis gekoppelt. Da das Mindestdruckventil zur Betätigung einen vorbestimmten Druck benötigt, entsteht ein entsprechender Rückstaudruck im Kühlstromkreis.

Das Ventil zur Kupplungskühlung hat die Aufgabe, die Kühlung der Kupplung zu steuern. Das Mindestdruckventil verhindert dabei, dass während der Startphase Luft über den Rücklauf des Kühlstromkreises in den Ansaugtrakt der Pumpe des Pumpenstromes gelangt und somit kein Öl aus einem Versorgungstank gefördert wird. Neben dem Nachteil durch das Auftreten des vorbeschriebenen Rückstaudruckes im Kühlstromkreis ergibt sich bei dem bekannten System der weitere Nachteil, dass ein hoher Bauraumbedarf aufgrund der beiden erforderlichen Ventileinrichtungen erforderlich ist.

Durch die Druckschrift DE 10 2004 005 790 A1 wird eine Steuerung, insbesondere eine hydraulische Steuerung für ein Getriebe mit einer Wegventileinrichtung zum Steuern einer Kühlung einer Kupplung sowie zum Sicherstellen einer Ansaugfunktion einer Pumpe offenbart.

Bei der bekannten Steuerung umfasst die Wegeventileinrichtung zwingend notwendig zwei Steuerkolben, um die Kühlung der Kupplung und auch die Ansaugfunktion der Pumpe zu realisieren.

Demnach liegt der vorliegenden Erfindung die Aufgabe zugrunde, ein System und ein Verfahren zum Kühlen einer Kupplung eines Fahrzeuges mit einer Ventileinrichtung der eingangs genannten Gattung vorzuschlagen, mit dem zum einen die Kühlfunktion als auch die Ansaugfunktion in jeder Phase des Betriebes sichergestellt werden kann und zusätzlich eine besonders kompakte und platzsparende Bauweise realisiert wird.

Diese Aufgabe wird durch ein System zum Kühlen einer Kupplung eines Fahrzeuges mit einer Ventileinrichtung gelöst, über die ein Kühlstromkreis mit einem Pumpenstromkreis gekoppelt ist, wobei die Ventilanordnung nur einen Steuerkolben aufweist, welcher zumindest zum Ansteuern der Verbindung zwischen dem Kühlstromkreis und dem Pumpenstromkreis bewegbar ist. Auf diese Weise wird ein besonders kompakt aufgebautes System mit möglichst wenig Bauteilen zum Kühlen der Kupplung, beispielsweise eines Getriebes, wie z. B. eines CVT-Getriebes, eines Fahrzeuges realisiert.

Um z. B. auch während der Startphase ein Ansaugen der Pumpe bei dem erfindungsgemäßen System zu gewährleisten, kann der Steuerkolben vorzugsweise automatisch in einer Grundstellung derart ausgerichtet sein, dass die Verbindung zwischen dem Kühlstromkreis und dem Pumpenstromkreis geschlossen ist. Gemäß einer vorteilhaften Weiterbildung der vorliegenden Erfindung kann dies konstruktiv dadurch realisiert werden, dass ein erstes Ende des Steuerkolbens mit einem Federelement oder dergleichen gekoppelt ist. Somit wirkt die Federkraft des Federelements derart auf das erste Ende des Steuerkolbens, dass der Steuerkolben in seiner Grundstellung zum Verschließen der Verbindung zwischen dem Kühlstromkreis und dem Pumpenstromkreis automatisch gehalten wird. Es ist auch denkbar, dass andere konstruktive Maßnahmen eingesetzt werden, um zu gewährleisten, dass der Steuerkolben in seiner das Ansaugen der Pumpe ermöglichenden Grundstellung gehalten wird.

Im Rahmen einer bevorzugten Ausgestaltung der vorliegenden Erfindung kann der Steuerkolben zum Ansteuern des Kühlstromes erst nach dem Aufbau eines vorbestimmten Druckes im Kühlstromkreis aus seiner Grundstellung bewegt werden. Durch den Aufbau des quasi durch einen Rückstau des Kühlmedium aufgebrachten Druckes wird eine Kraft auf den Kolben bewirkt, die z. B. der Federkraft des Federelementes entgegengerichtet ist, um den Steuerkolben aus seiner Grundstellung je nach gewünschter Kühlleistung herauszubewegen.

Das erfindungsgemäße System kann vorzugsweise gemäß einer Weiterbildung vorsehen, dass der Steuerkolben mehrere Abschnitte oder dergleichen aufweist, welche mit den im Ventilgehäuse angeordneten Anschlusskanälen oder dergleichen zum Ansteuern des Kühlstromes und des Pumpenstromes korrespondieren. Demnach kann durch entsprechende Zuordnung der Anschlusskanäle mit dem Kühlstromkreis, dem Pumpenstromkreis und möglicherweise einem Vorsteuerkreis durch entsprechende Bewegung des einzig notwendigen Steuerkolbens eine Ansteuerung des Kühlstromkreises und des Pumpenstromkreises realisiert werden. Durch die Bewegung des Steuerkolbens können durch vorbestimmte Überdeckungslängen zwischen den Abschnitten an dem Kolben und den jeweils zugeordneten Anschlusskanälen bestimmte Verbindungen geschlossen bzw. geöffnet werden, sodass eine gewünschte Kühlleistung realisiert werden kann, ohne dass die Gefahr besteht, dass der Ansaugtrakt der Pumpe beispielsweise Luft ansaugt. Als Kühlmedium kann vorzugsweise Öl oder dergleichen verwendet werden, welches in einem Versorgungstank aufgenommen ist.

Eine mögliche Ausführungsform der vorliegenden Erfindung kann vorsehen, dass der Steuerkolben in einer Bohrung des Ventilgehäuses bewegbar aufgenommen ist, so dass die Anschlusskanäle über die zugeordneten Abschnitte des Steuerkolbens ansteuerbar sind. Dazu können beispielsweise die jeweils vorgesehenen Anschlusskanäle senkrecht zu der Bohrung im Ventilgehäuse ausgerichtet sein und in die Bohrung zumindest münden, sodass jeweils zwischen der Bohrung und den einzelnen Anschlusskanälen eine Verbindung realisiert wird. Die Anzahl der verwendeten Anschlusskanäle und der zugeordneten Abschnitte kann beliebig je nach Bedarf gewählt werden, wobei vorzugsweise fünf Anschlusskanäle mit jeweils einem zugeordneten Abschnitt gemäß einer Ausführung der vorliegenden Erfindung verwendet werden.

Bei der vorbezeichneten Ausführungsform des erfindungsgemäßen Systems kann ein erster Anschlusskanal als Zulauf des Pumpenstromes vorgesehen sein, wobei dem ersten Anschlusskanal ein erster etwa kreiszylindrischer Abschnitt an dem Steuerkolben zugeordnet ist. Es ist auch möglich, dass andere Querschnittsformen der Abschnitte verwendet werden. Bei einer kreiszylindrischen Querschnittsform des Steuerkolbens bietet sich eine ebenfalls etwa kreiszylindrische Querschnittsform der Abschnitte in vorteilhafter Weise an.

Ein zweiter Anschlusskanal kann als Rücklauf des Kühlstromes ausgebildet sein, wobei dem zweiten Anschlusskanal ein zweiter etwa kreiszylindrischer Abschnitt an dem Steuerkolben zugeordnet ist. Der zweite Anschlusskanal kann neben dem ersten Anschlusskanal in dem Ventilgehäuse vorgesehen sein. Der zugeordnete zweite Abschnitt kann vorzugsweise einen geringeren Durchmesser als der erste Abschnitt an dem Steuerkolben aufweisen. Somit kann über die Länge des Abschnittes in Längsrichtung der Bohrung eine Verbindung zwischen dem Rücklauf des Kühlstromes und dem Pumpenstrom realisiert werden, wenn der Steuerkolben in Längsrichtung der Bohrung bewegt wird, sodass der zweite Abschnitt aufgrund seiner Länge sowohl dem ersten als auch dem zweiten Anschlusskanal zugeordnet werden kann.

Gemäß einer nächsten Weiterbildung kann neben dem zweiten Anschlusskanal ein dritter Anschlusskanal als erster Zulauf des Kühlstromkreises und ein vierter Anschlusskanal als zweiter Zulauf des Kühlstromkreises vorgesehen sein. Vorzugsweise kann dem dritten Anschlusskanal ein dritter etwa kreiszylindrischer Abschnitt an dem Steuerkolben zugeordnet sein.

Eine weitere Ausgestaltung bei dem erfindungsgemäßen System kann vorsehen, dass der Durchmesser des ersten Abschnittes und des dritten Abschnittes etwa identisch sind. Da der zweite Abschnitt einen geringeren Durchmesser aufweist und zwischen dem ersten Abschnitt und dem dritten Abschnitt angeordnet ist, ergeben sich Übergangsbereiche zwischen dem zweiten Abschnitt und dem ersten Abschnitt bzw. dem dritten Abschnitt, welche bei einer bevorzugten Ausführungsform der vorliegenden Erfindung etwa gerundet ausgebildet sind. Damit ergeben sich strömungstechnisch vorteilhafte Übergangsbereiche.

Um eine besonders vorteilhafte Regelungsmöglichkeit für den Zulauf des Kühlstromes zu realisieren, sind beispielsweise zwei Zuläufe für den Kühlstromkreis vorgesehen, wobei dem vierten Anschlusskanal für den zweiten Zulauf des Kühlstromkreises ein abgesetzter Bereich des Steuerkolbens zugeordnet ist. Da gemäß einer weiteren Ausgestaltung der vorliegenden Erfindung der dritte Anschlusskanal und der vierte Anschlusskanal miteinander verbunden sind, kann ein Rückstaudruck in den beiden Zuläufen des Kühlstromkreises erzeugt werden, wobei dieser Druck über die Fläche des abgesetzten Bereiches eine Kraft auf den Steuerkolben bewirkt, so dass dieser gegen die Federkraft bewegt wird, wodurch der dritte Anschlusskanal durch die Bewegung des Steuerkolbens überdeckt wird, so dass der Kühlstrom verringert wird, bis ein vorbestimmter bzw. gewünschter Kühlstrom eingestellt ist.

Gemäß einer nächsten Weiterbildung, kann vorgesehen sein, dass neben dem vierten Anschlusskanal ein fünfter Anschlusskanal als Steuerdruckleitung eines Steuerkreises vorgesehen ist, wobei dem fünften Anschlusskanal ein zweites Ende des Steuerkolbens als Fläche zugeordnet ist, die mit dem Steuerdruck bei Bedarf beaufschlagbar ist, um den Steuerkolben gegen die Federkraft zu bewegen können. Die Anordnungsreihenfolge der Anschlusskanäle und der zugeordneten Abschnitte kann, je nach Anwendungsfall, auch verändert werden. Beispielsweise kann die Anzahl der Anschlusskanäle auch verändert werden.

Bei der Verwendung des erfindungsgemäßen Systems bei einem Fahrzeug mit einem stufenlos verstellbaren CVT-Getriebe können die beiden Zuläufe des Kühlstromkreises zu einer Strahlpumpe geführt werden, um den Kühlstrom höher zu verdichten. Jedoch kann das erfindungsgemäße System auch bei anderen Getriebesystemen zum Einsatz kommen.

Insgesamt kann mit dem erfindungsgemäßen System eine Luftansaugung während der Startphase vermieden und je nach Bedarf entweder eine Kühlung mit etwa konstant geregeltem Kühlmediumdruck oder ein Beenden der Kühlung realisiert werden, ohne dass mehrere Ventileinrichtungen und mehrere Steuerkolben erforderlich sind.

Die der Erfindung zugrundeliegende Aufgabe wird auch durch ein Verfahren zum Kühlen einer Kupplung eines Fahrzeuges gelöst, bei dem eine Ventileinrichtung verwendet wird, über die ein Kühlstromkreis mit einem Pumpenstromkreis gekoppelt wird. Erfindungsgemäß wird bei der Ventileinrichtung ein Steuerkolben verwendet, welcher zumindest zum Ansteuern der Verbindung zwischen dem Kühlstromkreis und dem Pumpenstromkreis bewegt wird.

Bei dem erfindungsgemäßen Verfahren kann gemäß einer Weiterbildung vorgesehen sein, dass die Verbindung zwischen dem Kühlstromkreis und dem Pumpenstromkreis in einer Grundstellung des Steuerkolbens geschlossen wird. Auf diese Weise kann durch das vorgeschlagene Verfahren zu Beginn eine optimale Ansaugfunktion bei der Pumpe realisiert werden.

Im Rahmen einer vorteilhaften Ausgestaltung kann vorgesehen sein, dass der Steuerkolben zum Ansteuern bzw. Einstellen eines gewünschten Kühlstromes erst nach dem Aufbau eines vorbestimmten Druckes im Kühlstromkreis aus der Grundstellung bewegt wird. Bei dem erfindungsgemäßen Verfahren kann der Kühlstrom zum Kühlen der Kupplung nach dem Beenden der Startphase durch die Bewegung des Steuerkolbens angesteuert werden.

Gemäß einer Weiterbildung der Erfindung kann als mögliche Regelsituation bei dem erfindungsgemäßen Verfahren vorgesehen sein, dass der Steuerkolben mit einer aus dem Vorsteuerdruck resultierenden Kraft beaufschlagt wird, welche z. B. geringfügig kleiner als die auf den Steuerkolben entgegen wirkende Federkraft ist, wobei in dem Zulauf des Kühlstromkreises ein Rückstaudruck als Maß für die Kühlstrommenge aufgebaut wird und bei Erreichen eines vorbestimmten Rückstaudruckes der Steuerkolben gegen die Federkraft bewegt wird, so dass eine Verbindung zwischen dem Rücklauf des Kühlstromkreises und dem Pumpenstromkreises geöffnet und zumindest ein Teil des Kühlstromes zum Regeln des Kühlstromes direkt in den Pumpenstromkreis geleitet wird. Auf diese Weise wird eine Kupplungskühlung bei einem etwa konstanten Druck erfolgen, der zur Strahlpumpe geleitet wird.

Eine weitere mögliche Regelsituation kann im Rahmen einer weiteren Ausgestaltung der Erfindung dadurch realisiert werden, dass der Steuerkolben mit einer aus dem Vorsteuerdruck resultierenden Kraft beaufschlagt wird, welche größer als die auf den Steuerkolben entgegen wirkende Federkraft ist, und dass durch die Bewegung des Kolbens die Verbindung zwischen dem Rücklauf des Kühlstromkreises und dem Zulauf des Kühlstromkreises verschlossen wird, so dass die Kühlung der Kupplung beendet wird. Demnach wird die Kühlung durch das Ableiten des Kühlmediums aus dem Rücklauf des Kühlstromkreises in den Pumpenstromkreis 2 unterbrochen, wenn dies gewünscht wird.

Vorzugsweise kann das erfindungsgemäße Verfahren bei dem vorgeschlagenen System zum Einsatz kommen. Es sind jedoch auch andere Anwendungsmöglichkeiten denkbar.

Nachfolgend wird die vorliegende Erfindung anhand der dazugehörigen Zeichnungen näher erläutert. Es zeigen:
- Figur 1: eine Prinzipansicht eines bekannten Systems zum Kühlen einer Kupplung eines Fahrzeuges;
- Figur 2: eine schematische dreidimensionale Teilansicht einer möglichen Ausführungsform eines erfindungsgemäßen Systems zum Kühlen einer Kupplung;

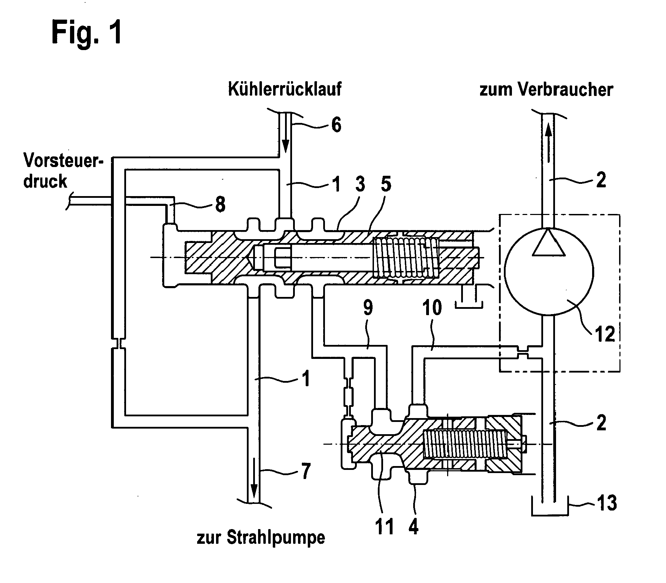

In Figur 1 ist eine Prinzipdarstellung eines bekannten Systems zum Kühlen einer Kupplung eines Fahrzeuges mit zwei Ventileinrichtungen dargestellt, über die ein Kühlstromkreis 1 mit einem Pumpenstromkreis 2 gekoppelt wird.

Als Ventileinrichtungen sind ein Ventil 3 zur Kupplungskühlung und ein Mindestdruckventil 4 vorgesehen. Das Ventil 3 zur Kupplungskühlung weist einen Ventilkolben 5 auf. Der Ventilkolben 5 ist federbelastet in einer Bohrung des Ventils 3 verschiebbar aufgenommen. Das Ventil 3 zur Kupplungskühlung ist mit einem Rücklauf 6 und einem Zulauf 7 des Kühlstromes sowie mit einer Vorsteuerdruckleitung 8 gekoppelt. Des Weiteren ist das Ventil 3 zur Kupplungskühlung über eine Leitung 9 mit dem Mindestdruckventil 4 verbunden. Das Mindestdruckventil 4 weist ebenfalls einen federbelasteten Ventilkolben 11 auf und ist über eine weitere Leitung 10 mit dem Pumpenstromkreis 2 verbunden. Der Pumpenstromkreis 2 umfasst eine Pumpe 12, die aus einem Versorgungstank 13 mit Öl als Kühlmedium versorgt wird.

Bei dem bekannten System wird das Kühlmedium verwendet, um damit eine nicht weiter dargestellte Kupplung z.B. während ihrer Schlupfphase zu kühlen. Das nicht mehr benötigte Kühlmedium fließt zurück zur Pumpe 12. Das Ventil 3 zur Kupplungskühlung hat die Aufgabe die Kühlung der Kupplung zu steuern. Das Mindestdruckventil 4 verhindert dabei, das während der Startphase Luft über den Rücklauf 6 des Kühlstromes in den Saugtrakt der Pumpe 12 im Pumpenstromkreis 2 gelangt und somit kein Öl aus dem Versorgungstank 13 gefördert wird.

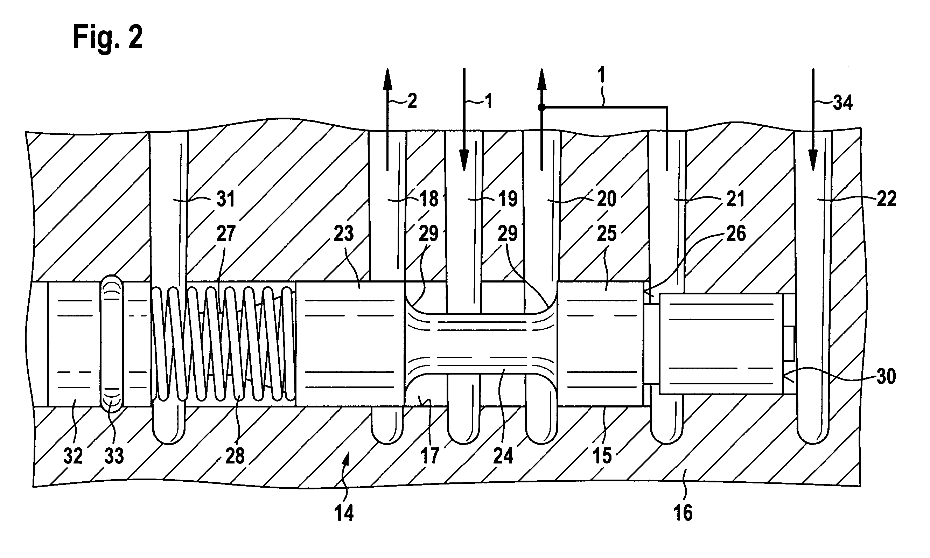

In Figur 2 ist eine mögliche Ausführungsform eines erfindungsgemäßen Systems zum Kühlen einer Kupplung eines Fahrzeuges mit einer Ventilanordnung dargestellt. Bei dem erfindungsgemäßen System werden die beiden Ventilanordnungen bei dem aus Figur 1 bekannten System durch eine Ventileinrichtung ersetzt.

Das erfindungsgemäße System umfasst somit nur eine Ventileinrichtung 14 mit lediglich einem Steuerkolben 15, der in einer im Ventilgehäuse 16 vorgesehenen Bohrung 17 bewegbar angeordnet ist. Senkrecht zu der Bohrung 17 sind in dem Ventilgehäuse 16 mehrere Anschlusskanäle 18, 19, 20, 21, 22, 31 angeordnet, welche jeweils mit der Bohrung 17 strömungsmäßig verbunden sind. Der in der Bohrung 17 bewegbare Steuerkolben 15 weist mehrere Abschnitte bzw. Bereiche 23, 24, 25, 26 auf, welche mit den Anschlusskanälen 18, 19, 20, 21, 22, 31 derart korrespondieren, dass durch die Bewegung des Steuerkolbens 15 ein Kühlstrom und ein Pumpenstrom angesteuert werden kann.

Erfindungsgemäß ist der Steuerkolben 15 in einer Grundstellung derart ausgerichtet, dass die Verbindung zwischen dem Kühlstromkreis und dem Pumpenstromkreis 2 geschlossen ist. Dies wird dadurch erreicht, dass ein erstes Ende 27 des Steuerkolbens 15 mit einem Federelement 28 gekoppelt ist, so dass der Steuerkolben 15 durch die auf den Steuerkolben 15 wirkende Federkraft des Federelements 28 in der Grundstellung gehalten wird. In der Grundstellung befindet sich der Steuerkolben 15 an seinem rechten Anschlag im Ventilgehäuse 16. Zum Ansteuern des Kühlstromes wird der Steuerkolben 15 erst nach Aufbau eines vorbestimmten Druckes im Kühlstromkreis 1 aus seiner Grundstellung bewegt.

Der erste Anschlusskanal 18 ist als Zulauf des Pumpenstromkreises 2 ausgebildet, wobei dem ersten Anschlusskanal 18 ein erster etwa kreiszylindrischer Abschnitt 23 an dem Steuerkolben 15 zugeordnet ist. Neben dem ersten Anschlusskanal 18 ist der zweite Anschlusskanal 19 als Rücklauf des Kühlstromeskreises 1 ausgebildet, wobei dem zweiten Anschlusskanal 19 der zweite etwa kreiszylindrischer Abschnitt 24 an dem Steuerkolben 15 zugeordnet ist. Der Kühlstromkreis 1 und der Pumpenstromkreis 2 sind jeweils durch einen Pfeil in Figur 2 angedeutet. Neben dem zweiten Anschlusskanal 19 ist eine dritter Anschlusskanal 20 als erster Zulauf des Kühlstromkreises 1 und ein vierter Anschlusskanal 21 als zweiter Zulauf des Kühlstromkreises 1 vorgesehen.

Dem dritten Anschlusskanal 20 ist ein dritter etwa kreiszylindrischer Abschnitt 25 an dem Steuerkolben 15 zugeordnet. Der Durchmesser des zweiten kreiszylindrischen Abschnittes 24 ist jeweils kleiner als die Durchmesser des ersten Abschnittes 23 oder des dritten Abschnittes 25. Da der zweite Abschnitt 24 zwischen dem ersten Abschnitt 23 und dem dritten Abschnitt 25 angeordnet ist, sind Übergangsbereiche 29 zwischen dem zweiten Abschnitt 24 und dem ersten Abschnitt 23 bzw. dem dritten Abschnitt 25 vorgesehen, welche bei dem gezeigten Ausführungsbeispiel gerundet ausgebildet sind.

Dem vierten Anschlusskanal 21 ist ein abgesetzter Bereich 26 an dem Steuerkolben 15 zugeordnet. Der dritte Anschlusskanal 20 und der vierte Anschlusskanal 21 sind miteinander verbunden und führen gemeinsam zu einer nicht weiter dargestellten Strahlpumpe, welche das Kühlmedium höher verdichtet, welches für die Kühlung der Kupplung eines stufenlos verstellbaren CVT-Getriebes erforderlich ist.

Schließlich ist ein fünfter Anschlusskanal 22 als Vorsteuerdruckleitung eines Steuerkreises vorgesehen, wobei dem fünften Anschlusskanal 22 ein zweites Ende 30 des Steuerkolbens 15 zugeordnet ist. Der fünfte Anschlusskanal 22 beaufschlagt die Fläche des zweiten Endes 30 des Steuerkolbens 15 mit dem Vorsteuerdruck zum Aufbringen einer Kraft, welche gegen die Federkraft des Federelements 28 wirkt, so dass der Steuerkolben 15 zum Ansteuern des Kühlstromes bewegbar ist. Der Vorsteuerkreis 34 ist in Figur 2 mit einem Pfeil angedeutet.

Ferner ist ein weiterer sechster Anschlusskanal 31 vorgesehen, der im Bereich des ersten Endes 27 des Steuerkolbens 15 in die Bohrung 17 mündet. Dieser sechste Anschlusskanal 31 ist nicht unbedingt erforderlich und dient als Ausgleichkanal, um die Bewegung des Steuerkolbens 15 geeignet abzudämpfen. Das mit dem ersten Ende 27 des Steuerkolbens 15 gekoppelte Federelement 28 ist an einem Dichtstopfen 32 befestigt, wobei der Dichtstopfen 32 die Bohrung 17 mit Hilfe eines Dichtringes 33 abdichtet.

Die Funktionsweise des erfindungsgemäßen Systems und des Verfahrens zum Kühlen der Kupplung eines Fahrzeuges insbesondere mit der dargestellten Ventilanordnung kann wie folgt beschrieben werden.

Zu Beginn des Betriebes ist es eine erste Aufgabe der Ventileinrichtung 14, es zu verhindern, dass die nicht weiter dargestellte Pumpe in der Startphase Luft über den zweiten Anschlusskanal19 ansaugt, welcher als Rücklauf des Kühlstromkreises 1 dient. Während der Startphase befindet sich nämlich kein bzw. ein niedriger Druck im System, da die Pumpe noch nicht in Betrieb ist. In dieser Phase bzw. in der Grundstellung wird der Steuerkolben 15 durch die Federkraft des Federelements 28 nach rechts bis zum Anschlag im Bereich des fünften Anschlusskanals 22 bewegt. In dieser Grundstellung verschließt der Steuerkolben 15 mit dem ersten Abschnitt 23 die Verbindung zwischen dem als Rücklauf des Kühlstromkreises 1 ausgebildeten zweiten Anschlusskanals 19 und dem als Zulauf des Pumpenstromkreises 2 ausgebildeten ersten Anschlusskanals 18. Mit einer entsprechenden Überdeckungslänge des ersten Abschnittes 23 ist es somit gewährleistet, dass die Pumpe beim Start Kühlmedium bzw. Öl aus einem Versorgungstank zieht und somit verhindert wird, dass Luft aus dem Rücklauf des Kühlstromes in den Pumpenstromkreis 2 gelangt.

Nach dem Starten des Systems können beispielsweise noch zwei weitere Regelsituationen eintreten.

Bei einer ersten Situation soll die Kupplungskühlung bei einem etwa konstanten Druck erfolgen, der zur Strahlpumpe geleitet wird. In dieser ersten Situation wird ein mittlerer Vorsteuerdruck in dem fünften Anschlusskanal 22 von beispielsweise 2,5 bar auf die Stirnfläche des zweiten Endes 30 des Steuerkolbens 15 aufgebracht. Dieser Vorsteuerdruck bewirkt eine Kraft auf den Steuerkolben 15, welche gerade noch kleiner als die dagegen wirkende Federkraft des Federelements 28 ist. Somit verbleibt der Steuerkolben 15 zunächst in seiner Grundstellung.

In dieser Grundstellung wird das von dem als Rücklauf des Kühlstromkreises 1 ausgebildeten zweiten Anschlusskanal 19 kommende Kühlmedium vollständig zur Kupplungskühlung über den dritten Anschlusskanal 20 geleitet. Der zur Strahlpumpe geleitete Kühlmediumstrom bewirkt einen durch die Strahlpumpe erzeugten Rückstaudruck in dem dritten und vierten Anschlusskanal 20, 21. Dieser Rückstaudruck ist ein Maß für die Kühlstrommenge über die Kupplung und soll beispielsweise auf einen Wert von 4 bar angesteuert werden. Zu diesem Zweck wirkt der Rückstaudruck auf die Fläche des abgesetzten Bereiches 26 des Steuerkolbens 15. Dadurch wird eine zusätzliche Kraft auf den Steuerkolben 15 aufgebracht, welche der Federkraft des Federelements 28 entgegen wirkt.

Wenn der Rückstaudruck den gewünschten Wert von beispielsweise 4 bar erreicht, wird der Steuerkolben 15 aus seiner Grundstellung in die in Figur 2 dargestellte Regelposition gebracht. In dieser Regelposition stehen die Kräfte, welche auf den Steuerkolben 15 wirken, im Gleichgewicht. Sobald der Rückstaudruck weiter ansteigt, wird der Steuerkolben 15 weiter nach links gegen die Federkraft des Federelements 28 bewegt und die Verbindung zwischen dem zweiten Anschlusskanal 19 und dem ersten Anschlusskanal 18 geöffnet, so dass zumindest ein Teil des Kühlstromes direkt zur Pumpe geleitet wird. Dadurch wird verhindert, dass der Druck an der Strahlpumpe weiter ansteigt. Wenn der Druck in dem ersten Anschlusskanal 18 höher ist, als der Rückstaudruck in dem dritten Anschlusskanal 20 und dem vierten Anschlusskanal 21 wird der Steuerkolben 15 noch weiter nach links bewegt, so dass die Verbindung zwischen dem zweiten Anschlusskanal 19 und dem dritten Anschlusskanal 20 zumindest teilweise verschlossen wird.

In einer zweiten möglichen Regelsituation ist keine Kühlung mehr erwünscht, so dass das Kühlmedium aus dem Rücklauf des Kühlstromkreises 1 in den Pumpenstromkreis 2 geleitet wird.

Bei dieser Regelsituation wird ein maximaler Vorsteuerdruck in dem fünften Anschlusskanal 22 von beispielsweise 5 bar auf die Stirnfläche des zweiten Endes 30 des Steuerkolbens 15 aufgebracht. Dadurch wird der Steuerkolben 15 gegen die Federkraft des Federelements 28 in die linke Anschlagsposition gebracht. In dieser Stellung ist die Verbindung zwischen dem als Rücklauf des Kühlstromes ausgebildeten Anschlusskanals 2 und dem als Zulauf des Kühlstromkreises 1 ausgebildeten dritten Anschlusskanals 20 verschlossen, so dass kein Kühlmedium bzw. Öl zur Kupplung bzw. zur Strahlpumpe gelangen kann. Somit wird die Kühlung der Kupplung beendet. Die Verbindung zwischen dem zweiten Anschlusskanal 19 und dem ersten Anschlusskanal 18, welcher zur Pumpe führt, ist in dieser Stellung des Steuerkolbens 15 vollständig geöffnet, so dass das vom zweiten Anschlusskanal 19 kommende Kühlmedium komplett über den ersten Anschlusskanal 18 zur Pumpe geleitet werden kann.

### Bezugszeichenliste

- 1.: Kühlstromkreis
- 2.: Pumpenstromkreis
- 3.: Ventil zum Kühlen der Kupplung
- 4.: Mindestdruckventil
- 5.: Ventilkolben
- 6.: Rücklauf
- 7.: Zulauf
- 8.: Vorsteuerdruckleitung
- 9.: Leitung
- 10.: Leitung
- 11.: Ventilkolben
- 12.: Pumpe
- 13.: Versorgungstank
- 14.: Ventileinrichtung
- 15.: Steuerkolben
- 16.: Ventilgehäuse
- 17.: Bohrung
- 18.: Erster Anschlusskanal
- 19.: Zweiter Anschlusskanal
- 20.: Dritter Anschlusskanal
- 21.: Vierter Anschlusskanal
- 22.: Fünfter Anschlusskanal
- 23.: Erster Abschnitt
- 24.: Zweiter Abschnitt
- 25.: Dritter Abschnitt
- 26.: Abgesetzter Bereich
- 27.: Erstes Ende des Steuerkolbens
- 28.: Federelement
- 29.: Übergangsbereiche
- 30.: Zweites Ende des Steuerkolbens
- 31.: Sechster Anschlusskanal
- 32.: Dichtstopfen
- 33.: Dichtring
- 34.: Vorsteuerkreis

## Patentansprüche

1. System zum Kühlen einer Kupplung eines Fahrzeuges mit einer Ventileinrichtung, über die ein Kühlstromkreis mit einem Pumpenstromkreis koppelbar ist, **dadurch gekennzeichnet, dass** die Ventileinrichtung (14) einen Steuerkolben (15) aufweist, welcher zumindest zum Ansteuern der Verbindung zwischen dem Kühlstromkreis (1) und dem Pumpenstromkreis (2) bewegbar ist.

2. System nach Anspruch 1, **dadurch gekennzeichnet, dass** der Steuerkolben (5) in seiner Grundstellung derart ausgerichtet ist, dass die Verbindung zwischen dem Kühlstromkreis (1) und dem Pumpenstromkreis (2) geschlossen ist.

3. System nach Anspruch 2, **dadurch gekennzeichnet, dass** ein erstes Ende des Steuerkolbens (15) mit einem Federelement (28) gekoppelt ist.

4. System nach Anspruch 2 oder 3, **dadurch gekennzeichnet, dass** der Steuerkolben (15) zum Ansteuern des Kühlstromes (1) erst nach dem Aufbau eines vorbestimmten Druckes im Kühlstromkreis (1) aus der Grundstellung bewegbar ist.

5. System nach einem der Ansprüche 1 bis 4, **dadurch gekennzeichnet, dass** der Steuerkolben (15) mehrere Abschnitte (23, 24, 25, 26) aufweist, welche mit im Ventilgehäuse (16) angeordneten Anschlusskanälen (18, 19, 20, 21, 22, 31) zum Ansteuern des Kühlstromes (1) und des Pumpenstromes (2) korrespondieren.

6. System nach Anspruch 5, **dadurch gekennzeichnet, dass** der Steuerkolben (15) in einer Bohrung (17) des Ventilgehäuses (16) derart bewegbar aufgenommen ist, dass die Anschlusskanäle (18, 19, 20, 21, 22, 31) über die zugeordneten Abschnitte (23, 24, 25, 26) des Steuerkolbens (15) ansteuerbar sind.

7. System nach Anspruch 5 oder 6, **dadurch gekennzeichnet, dass** ein erster Anschlusskanal (18) als Zulauf des Pumpenstromkreises (2) vorgesehen ist, dem ein erster etwa kreiszylindrischer Abschnitt (23) an dem Steuerkolben (15) zugeordnet ist.

8. System nach einem der Ansprüche 5 bis 7, **dadurch gekennzeichnet, dass** ein zweiter Anschlusskanal (19) als Rücklauf des Kühlstromkreises (1) ausgebildet ist, dem ein zweiter etwa kreiszylindrischer Abschnitt (24) an dem Steuerkolben (15) zugeordnet ist.

9. System nach einem der Ansprüche 5 bis 8, **dadurch gekennzeichnet, dass** ein dritter Anschlusskanal (20) als erster Zulauf des Kühlstromkreises (1) und ein vierter Anschlusskanal (21) als zweiter Zulauf des Kühlstromkreises (1) vorgesehen sind.

10. System nach Anspruch 9, **dadurch gekennzeichnet, dass** dem dritten Anschlusskanal (20) ein dritter etwa kreiszylindrischer Abschnitt (25) an dem Steuerkolben (15) zugeordnet ist.

11. System nach Anspruch 10, **dadurch gekennzeichnet, dass** der Durchmesser des zweiten kreiszylindrischen Abschnittes (24) jeweils kleiner als der Durchmesser des ersten Abschnittes (23) und des dritten Abschnittes (25) ist.

12. System nach Anspruch 10 oder 11, **dadurch gekennzeichnet, dass** der zweite Abschnitt (24) zwischen dem ersten (23) und dem dritten Abschnitt (25) angeordnet ist, wobei die Übergangsbereiche (29) zwischen dem zweiten Abschnitt (24) und dem ersten Abschnitt (23) bzw. dem dritten Abschnitt (25) gerundet ausgebildet sind.

13. System nach einem der Ansprüche 9 bis 12, **dadurch gekennzeichnet, dass** dem vierten Anschlusskanal (21) ein abgesetzter Bereich (26) an dem Steuerkolben (15) zugeordnet ist.

14. System nach einem der Ansprüche 9 bis 13, **dadurch gekennzeichnet, dass** der dritte Anschlusskanal (20) und der vierte Anschlusskanal (21) miteinander verbunden sind.

15. System nach einem der Ansprüche 5 bis 14, **dadurch gekennzeichnet, dass** ein fünfter Anschlusskanal (22) als Vorsteuerdruckleitung eines Vorsteuerkreises (34) vorgesehen ist, dem ein zweites Ende (30) des Steuerkolbens (15) zugeordnet ist.

16. Verfahren zum Kühlen einer Kupplung eines Fahrzeuges, bei dem eine Ventileinrichtung verwendet wird, über die ein Kühlstromkreis mit einem Pumpenstromkreis gekoppelt wird, **dadurch gekennzeichnet, dass** bei der Ventileinrichtung (14) ein Steuerkolben (15) verwendet wird, welcher zumindest zum Ansteuern der Verbindung zwischen dem Kühlstromkreis (1) und dem Pumpenstromkreis (2) bewegt wird.

17. Verfahren nach Anspruch 16, **dadurch gekennzeichnet, dass** die Verbindung zwischen dem Kühlstromkreis (1) und dem Pumpenstromkreis (2) in einer Grundstellung des Steuerkolbens (15) geschlossen wird.

18. Verfahren nach Anspruch 16 oder 17, **dadurch gekennzeichnet, dass** der Steuerkolben (15) zum Ansteuern des Kühlstromeskreises (1) erst nach dem Aufbau eines vorbestimmten Druckes im Kühlstromkreis (2) aus der Grundstellung bewegt wird.

19. Verfahren nach einem der Ansprüche 16 bis 18, **dadurch gekennzeichnet, dass** der Steuerkolben (15) mit einer aus dem Vorsteuerdruck resultierenden Kraft beaufschlagt wird, welche kleiner als die auf den Steuerkolben (15) entgegen wirkende Federkraft ist, dass in dem Zulauf des Kühlstromkreises (1) ein Rückstaudruck als Maß für die Kühlstrommenge aufgebaut wird, und dass bei Erreichen eines vorbestimmten Rückstaudruckes der Steuerkolben (15) gegen die Federkraft bewegt wird, so dass eine Verbindung zwischen dem Rücklauf des Kühlstromkreises (1) und dem Pumpenstromkreises (2) geöffnet und zumindest ein Teil des Kühlstromes zum Regeln des Kühlstromes direkt in den Pumpenstromkreis (2) geleitet wird.

20. Verfahren nach einem der Ansprüche 16 bis 18, **dadurch gekennzeichnet, dass** der Steuerkolben (15) mit einer aus dem Vorsteuerdruck resultierenden Kraft beaufschlagt wird, welche größer als die auf den Steuerkolben (15) entgegen wirkende Federkraft ist, und dass die Verbindung zwischen dem Rücklauf des Kühlstromkreises (1) und dem Zulauf des Kühlstromkreises (1) durch die Bewegung des Steuerkolbens (15) verschlossen wird, so dass die Kühlung der Kupplung beendet wird.
